(19) Europäisches Patentamt
European Patent Office
Office européen des brevets

(11) Numéro de publication : **0 032 342**
**B1**

(12) # FASCICULE DE BREVET EUROPÉEN

(45) Date de publication du fascicule du brevet : **09.03.83**

(51) Int. Cl.[3] : **B 64 G 1/44**

(21) Numéro de dépôt : **80401857.0**

(22) Date de dépôt : **23.12.80**

(54) **Agencement de satellite artificiel pourvu de générateurs solaires et d'antennes déployables.**

(30) Priorité : **04.01.80 FR 8000109**

(43) Date de publication de la demande : **22.07.81 Bulletin 81/29**

(45) Mention de la délivrance du brevet : **09.03.83 Bulletin 83/10**

(84) Etats contractants désignés : **AT BE CH DE GB IT LI NL SE**

(56) Documents cités :
**US A 3 205 362**
**US A 3 327 967**
**US A 3 627 585**
**US A 3 756 858**

**V.D.I. ZEITSCHRIFT, mai 1966, vol. 108, no. 13 « Der Konstruktive Aufbau unbemannter Raumflugkörper », pages 573-578.**

(73) Titulaire : **Société Nationale Industrielle Aérospatiale Société anonyme dite:**
**37 Bld de Montmorency**
**F-75016 Paris (FR)**

(72) Inventeur : **Marello, Georges**
**520, rue J. Pasero**
**F-06210 Mandelieu (FR)**
Inventeur : **Vermaile, Jean Claude**
**893, rue J. Pasero**
**F-06210 Mandelieu (FR)**

(74) Mandataire : **Bonnetat, Christian**
**Cabinet PROPI Conseils 23 rue de Léningrad**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 032 342 B1**

Jouve, 18, rue St-Denis, 75001 Paris, France

# Agencement de satellite artificiel pourvu de générateurs solaires et d'antennes déployables

La présente invention concerne un agencement de satellite artificiel pourvu de générateurs solaires et d'antennes déployables.

On sait que les satellites artificiels sont pourvus de générateurs solaires, destinés à leur alimentation en énergie électrique, et d'antennes, destinées aux transmissions radioélectriques. Pour leur lancement et leur mise sur orbite, ces satellites sont disposés dans la tête ou coiffe d'une fusée. Le volume intérieur d'une telle coiffe étant nécessairement limité, il est indispensable, pour les générateurs solaires et les antennes, de prévoir une structure repliable et déployable, de sorte que leur encombrement soit minimal pendant leur lancement et qu'ils réprennent leurs dimensions et positions de fonctionnement, lorsque le satellite se trouve sur son orbite.

Ainsi, chaque générateur solaire pour satellite comprend généralement un ensemble de panneaux porteurs de cellules solaires et articulés l'un à la suite de l'autre pour pouvoir occuper, soit une position repliée de lancement pour laquelle lesdits panneaux sont repliés l'un sur l'autre en zigzag, soit une position déployée de fonctionnement pour laquelle lesdits panneaux se trouvent au moins approximativement dans le prolongement l'un de l'autre. Cet ensemble de panneaux est souvent relié latéralement au corps du satellite par un volet articulé d'un côté sur ledit corps et de l'autre côté sur le panneau d'extrémité proximal. Le déploiement du générateur est commandé par un mécanisme d'entraînement recevant ses ordres du satellite.

De même, les antennes du satellite sont articulées sur le corps de celui-ci pour pouvoir occuper soit une position repliée de lancement, soit une position déployée de fonctionnement.

En position repliée, lesdites antennes se trouvent le plus souvent à l'aplomb du corps du satellite et des générateurs solaires, également en position repliée, de sorte que la longueur des panneaux des générateurs solaires, ainsi que la longueur des volets d'articulation au corps du satellite se trouvent limitées par des considérations de configuration en positions repliées.

Une telle limitation de la longueur de chacun des panneaux des générateurs solaires, quoique désavantageuse, n'est pas autrement gênante, car on peut y remédier en jouant sur le nombre desdits panneaux, pour obtenir la surface de cellules solaires optimale.

En revanche, la limitation de la longueur des volets d'articulation au corps du satellite est un inconvénient particulièrement grave puisque cette longueur constitue, en position déployée des générateurs solaires, l'écartement ou éloignement de ceux-ci au corps du satellite. Or, cet éloignement doit être au moins égal à une longueur minimale en dessous de laquelle le corps du satellite risque de porter ombre sur les générateurs solaires et influencer thermiquement les cellules de ceux-ci. Les structures actuelles de satellite, à cause de la limitation de la longueur des volets d'articulation, ne permettent pas d'atteindre, et donc *a fortiori* de dépasser, cette longueur minimale dans toutes les missions confiées aux satellites.

La présente invention a pour objet de remédier à cet inconvénient. Grâce à l'invention, la longueur du volet d'articulation au corps du satellite, et donc l'éloignement d'un générateur solaire audit corps, peut être fixée à toute valeur optimale désirée, supérieure à la longueur minimale définie ci-dessus.

A cette fin, selon l'invention, l'agencement de satellite comportant :

— un corps de satellite ;

— au moins un générateur solaire, comprenant un ensemble de panneaux porteurs de cellules solaires et articulés l'un à la suite de l'autre pour pouvoir occuper, soit une position repliée pour laquelle lesdits panneaux sont repliés l'un sur l'autre en zigzag, soit une position déployée pour laquelle lesdits panneaux se trouvent au moins approximativement dans le prolongement l'un de l'autre, ledit ensemble de panneaux étant relié latéralement audit corps de satellite par un volet articulé d'un côté sur ledit corps et de l'autre côté sur le panneau d'extrémité proximal, et

— au moins une antenne, articulée sur ledit corps de satellite pour pouvoir occuper soit une position déployée pour laquelle ladite antenne se trouve à l'extérieur dudit corps et dudit générateur solaire, soit une position repliée pour laquelle ladite antenne se trouve à l'aplomb dudit corps de satellite et dudit générateur solaire, également en position repliée, du côté de l'articulation dudit volet audit panneau proximal, est caractérisé en ce que, la forme de ladite antenne et son articulation sur le corps du satellite étant prévues pour que, en positions repliées de l'antenne et du générateur solaire, les parties latérales dudit générateur solaire ne soient pas recouvertes par ladite antenne, les moyens d'articulation entre ledit volet et ledit panneau proximal se trouvent à l'extrémité de prolongements latéraux de ceux-ci, ces prolongements étant disposés de part et d'autre de ladite antenne repliée.

Ainsi, grâce à ces prolongements latéraux du volet d'articulation et du panneau proximal, on peut disposer l'articulation entre ceux-ci au-dessus de l'antenne et donc augmenter en position déployée du générateur solaire, l'éloignement de celui-ci au satellite, de façon que ce corps ne puisse ni porter ombre sur le générateur déployée, ni exercer une influence thermique sur les cellules solaires dudit générateur.

L'invention est particulièrement aisée à mettre en œuvre. En effet, dans presque tous les satellites la forme des antennes est telle que leurs extrémités à l'aplomb des générateurs solaires repliés est moins large que ceux-ci. Il suffit donc de prévoir l'articulation desdites antennes pour que, en position repliée, les extrémités de celles-ci soient au moins approximativement centrées par rapport aux générateurs, ce qui permet alors le passage latéral desdits prolongements du volet et du panneau proximal. Rares sont les cas où il faudra modifier la forme des antennes. D'ailleurs, le plus souvent, la position repliée desdites antennes permettra, sans intervention supplémentaire, l'agencement desdits prolongements.

Dans le cas le plus fréquent où chaque panneau du générateur solaire comporte un cadre périphérique, les prolongements solidaires dudit panneau proximal seront avantageusement constitués par des prolongements des côtés longitudinaux dudit cadre. Il sera alors avantageux que les prolongements du volet d'articulation, quelle que soit la forme dudit volet, soient tels qu'ils sont accolés auxdits prolongements du panneau proximal en position repliée du générateur solaire, pour être en prolongement de ceux-ci en position déployée de ce dernier.

La présente invention concerne de plus un générateur solaire pour satellite, comprenant un ensemble de panneaux porteurs de cellules solaires et articulés l'un à la suite de l'autre pour pouvoir occuper, soit une position repliée pour laquelle lesdits panneaux sont repliés l'un sur l'autre en zigzag, soit une position déployée pour laquelle lesdits panneaux se trouvent au moins approximativement dans le prolongement l'un de l'autre, ledit ensemble de panneaux étant relié latéralement au corps dudit satellite par un volet articulé d'un côté sur ledit corps et de l'autre côté sur le panneau d'extrémité proximal, tandis que ledit satellite comporte au moins une antenne, articulée sur ledit corps de satellite pour pouvoir occuper soit une position déployée de fonctionnement, soit une position repliée pour laquelle ladite antenne se trouve à l'aplomb dudit corps de satellite et dudit générateur solaire, également en position repliée, du côté de l'articulation dudit volet audit panneau proximal, ce générateur solaire étant caractérisé en ce que son volet d'articulation et son panneau proximal comportent des prolongements latéraux en regard entre lesquels sont prévus des moyens d'articulation, de sorte que, en position repliée du générateur solaire, lesdits prolongements se trouvent de part et d'autre de ladite antenne repliée, lesdits moyens d'articulation étant du côté opposé au générateur solaire par rapport à l'antenne.

Les figures du dessin annexé feront bien comprendre comment l'invention peut être réalisée.

La figure 1 illustre, en demi-coupe axiale schématique, l'agencement connu des panneaux solaires d'un générateur en position repliée.

La figure 2 montre schématiquement, à une échelle différente et en plan, l'agencement connu des panneaux du générateur de la figure 1, en position déployée.

La figure 3 montre schématiquement en coupe deux générateurs solaires selon l'invention, logés en position repliée avec le satellite associé dans la tête d'une fusée.

La figure 4 est une vue de dessus schématique correspondant à la figure 2.

La figure 5 montre schématiquement, à une échelle différente et en plan, l'agencement des panneaux d'un générateur solaire des figures 3 et 4 en position déployée, permettant la comparaison avec l'agencement connu de la figure 2.

Sur ces figures des références identiques désignent des éléments semblables.

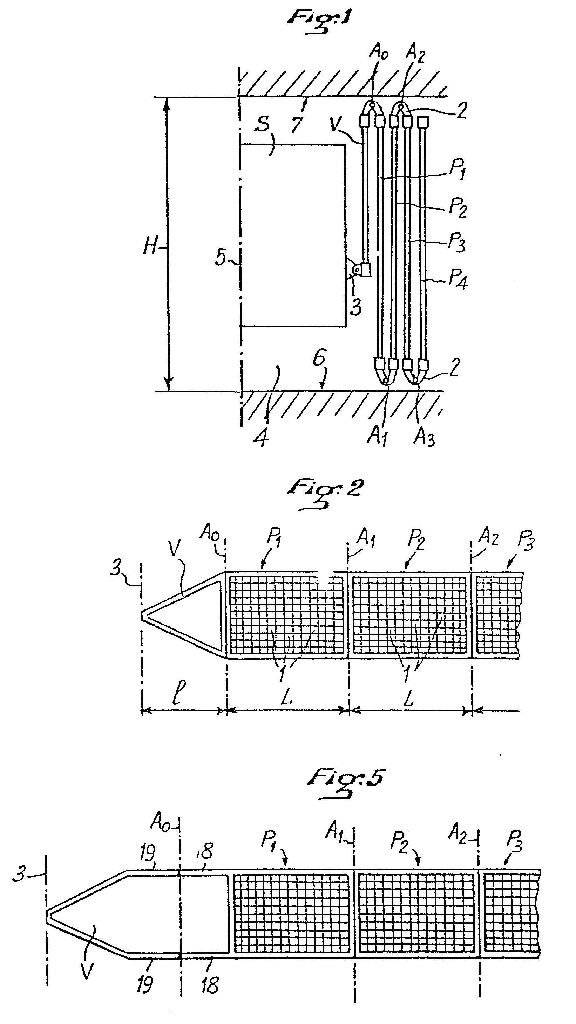

Le générateur solaire connu, montré par les figures 1 et 2, comporte une pluralité de panneaux solaires $P_1$, $P_2$, ... $P_n$ identiques et porteurs de cellules solaires 1. Ces panneaux solaires comportent un cadre périphérique et sont articulés l'un à la suite de l'autre autour d'axes d'articulation $A_1$, $A_2$, ... $A_{n-1}$ parallèles aux bords correspondants desdits panneaux et définis grâce à des articulations 2. Par ailleurs, l'extrémité du panneau $P_1$ opposée à l'axe d'articulation $A_1$, est articulée autour d'un axe d'articulation $A_0$, à un volet V lui-même articulé en 3 à un mécanisme d'entraînement prévu dans le satellite 5.

Grâce aux articulations 2 et 3, les panneaux $P_1$ à $P_n$ et le volet V peuvent occuper soit une position de repliement en zigzag telle que montrée en élévation sur la figure 1, soit une position de déploiement telle que montrée en plan sur la figure 2. Le passage d'une de ces positions à l'autre est réalisé par l'action du mécanisme d'entraînement mentionné ci-dessus ; celui-ci peut être de tout type connu et, comme il n'intervient pas dans l'objet de l'invention, il n'est pas représenté plus en détail.

Le volet V présente généralement une structure en V et est souvent désigné par le nom de « fourche ».

Le satellite S et son ou ses générateurs solaires V, $P_1$, $P_2$, ... $P_n$ repliés sont disposés dans un logement 4, centré sur l'axe 5 de la coiffe formant la tête de la fusée de lancement et de mise sur orbite dudit satellite. Ce logement 4 présente une hauteur maximale, définie par un niveau plancher 6 et un niveau plafond 7 déterminés par des considérations d'agencement de différents organes autour du satellite S, dans ladite coiffe.

Il en résulte que la longueur L des panneaux $P_1$ à $P_n$ (qui sont tous identiques) est déterminée par la hauteur H du logement 4, étant entendu que l'on a intérêt à choisir pour la longueur L la valeur maximale permise par cette hauteur H.

Par ailleurs, on voit que la longueur 1 du volet V est déterminée d'une part par l'emplacement de l'articulation 3, d'autre part par la longueur L. On remarquera que si l'articulation 3 n'est pas située à mi-hauteur (H/2) dans le logement 4 (ce qui est le cas sur la figure 1 où l'articulation 3 est plus proche du niveau plancher 6 que du niveau plafond 7), on peut choisir, pour le volet V, deux longueurs différentes, selon que l'on prévoit l'articulation $A_0$ du côté du niveau plancher 6 ou du côté du niveau plafond 7. Généralement, on choisit pour le volet V, la plus grande des deux longueurs possibles, comme cela est représenté sur la figure 1.

Ainsi, dans les agencements connus, le choix de la longueur $l$ du volet V est limité à deux possibilités seulement, fixées par la valeur de la hauteur H du logement 4, dans lequel les générateurs solaires se trouvent à l'état replié lors du lancement du satellite.

On remarquera que la longueur $l$ du volet V représente, lorsque le satellite est sur orbite et que les générateurs solaires sont dépliés (figure 2) pour l'alimenter en énergie électrique, l'éloignement de ceux-ci au corps du satellite S. Cet éloignement, d'après ce qui a été indiqué ci-dessus ne peut donc prendre que deux valeurs déterminées par la configuration repliée des générateurs et indépendantes de la configuration déployée de ceux-ci.

Or, il est indispensable d'adapter l'éloignement des générateurs déployés au corps du satellite, d'une part pour éviter que celui-ci ne porte ombre sur lesdits générateurs et d'autre part pour réduire au maximum l'influence thermique dudit satellite sur les cellules solaires 1 des panneaux $P_1$ à $P_n$. Il faut donc que cet éloignement présente une valeur optimale suffisamment grande, qui ne peut être obtenue dans les agencements connus, même en choisissant la plus grande des longueurs $l$ déterminées, de la façon indiquée ci-dessus, par la configuration repliée desdits générateurs.

Le niveau de plancher 6 est généralement déterminé par des organes massifs et compacts, tels que des moteurs, auxquels il est pratiquement impossible d'apporter des modifications d'emplacement et/ou de dimensions. Le niveau de plancher 6 doit donc être considéré comme intangible.

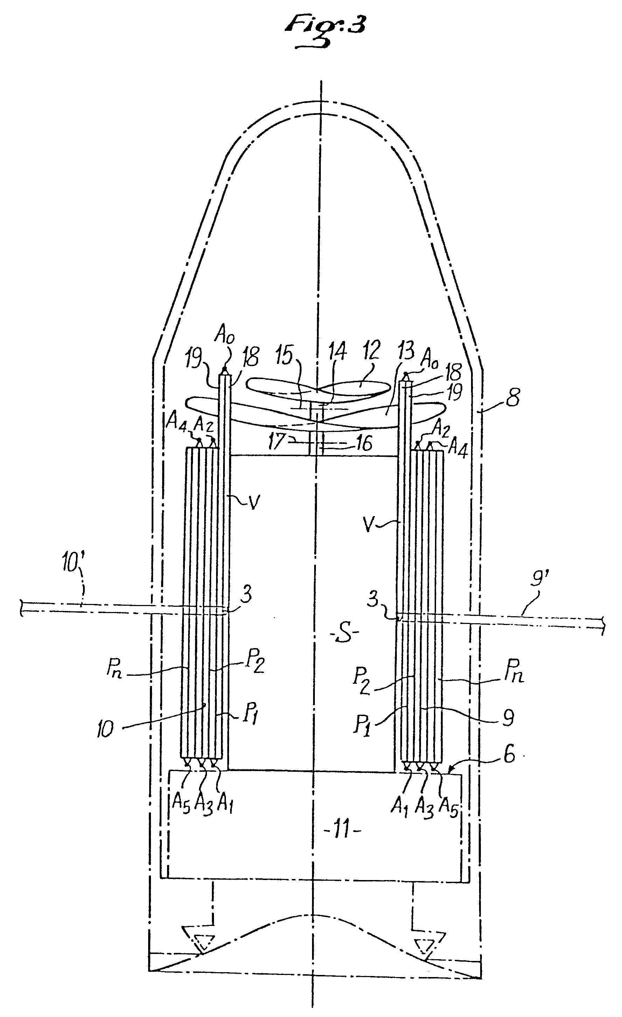

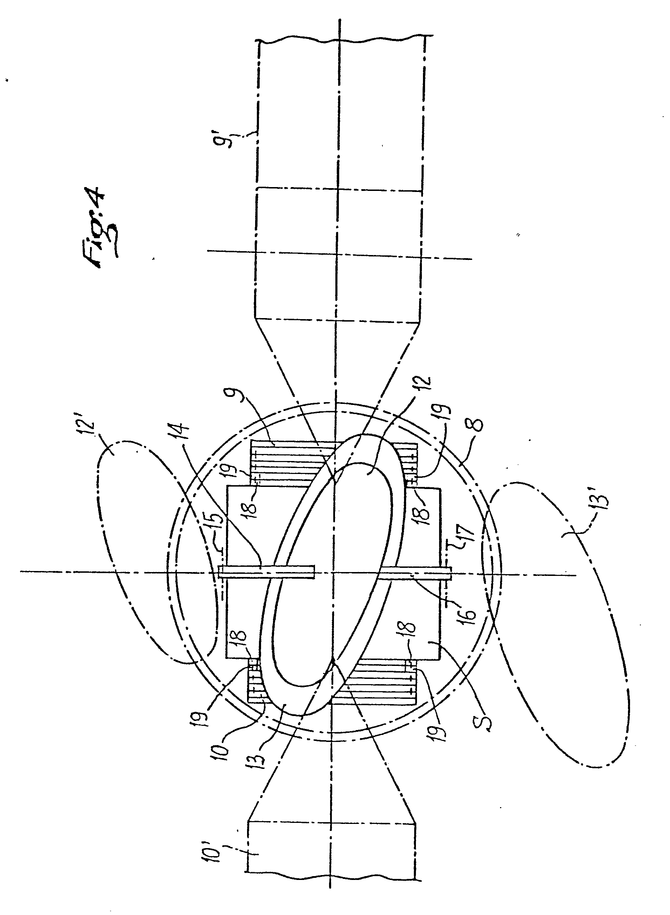

En revanche, on constate que généralement le niveau de plafond 7 est déterminé par des organes mobiles, relativement peu denses, tels que des antennes repliées. Partant de cette constatation, on expliquera l'invention en regard des figures 3 à 5. Sur les figures 3 et 4, on a représenté un satellite S, disposé à l'intérieur d'une coiffe 8 de fusée. Au satellite S sont associés deux générateurs solaires 9 et 10 disposés sur des côtés dudit satellite. Comme illustré sur la figure 1, chaque générateur 9 ou 10 est constitué d'une pluralité de panneaux articulés $P_1$ à $P_n$, dont le panneau proximal $P_1$ est relié de façon articulée au corps du satellite par un volet V. Ainsi, chaque générateur solaire 9 ou 10 peut occuper soit une position repliée (montrée en traits pleins sur les figures 3 et 4) soit une position déployée 9' ou 10' (montrée partiellement en traits mixtes sur les figures 3 et 4).

Le niveau plancher 6 est déterminé de façon définitive, par exemple par des moteurs 11, tandis que le niveau plafond 7 est déterminé par des antennes repliées 12 et 13. L'antenne 12 qui est par exemple un réflecteur de réception, est montée sur un bras 14 articulé en 15 par rapport au corps du satellite S. L'antenne 13, qui est par exemple un réflecteur d'émission, est montée sur un bras 16 articulé en 17 par rapport au corps du satellite S.

Ainsi, les antennes 12 et 13 peuvent occuper soit une position repliée (montrée en traits pleins sur les figures 3 et 4) soit une position déployée 12' et 13' (montrée en traits mixtes sur la figure 4).

Comme le montre bien la figure 4, on fait en sorte que, spontanément ou bien par action sur les bras 14 et 16, sur les articulations 15 et 17 et/ou sur la forme des réflecteurs 12 et 13, les parties latérales des générateurs solaires 9 et 10 ne soient pas recouvertes par lesdits réflecteurs. Ainsi, il est possible de prévoir des prolongements latéraux en regard 18 et 19 sur les volets V et les panneaux proximaux $P_1$, de sorte que lesdits prolongements latéraux passent de part et d'autre des réflecteurs repliés 12 et 13 et que les axes d'articulation $A_0$ se trouvent du côté opposé des générateurs 9 et 10 par rapport auxdits réflecteurs, c'est-à-dire au-dessus de ceux-ci.

En position déployée (voir la figure 5), la distance séparant l'articulation 3 du bord proximal du panneau $P_1$, au lieu d'être égal à $l$ comme dans la technique connue, est égale à la distance $l$ augmentée de la somme des longueurs des prolongements 18 et 19.

Ainsi, en choisissant de façon adéquate les longueurs des prolongements 18 et 19, on peut adapter l'éloignement des générateurs solaires déployés au corps du satellite en fonction des besoins spécifiques des missions confiées audit satellite.

On remarquera que, pour des satellites déjà construits présentant la configuration adéquate des réflecteurs en position repliée, le perfectionnement selon l'invention se fait sans modification des panneaux $P_2$ à $P_n$, par simple adjonction de prolongements 18 et 19 aux volets V et aux panneaux $P_1$. Une telle adjonction est aisée, puisqu'il suffit de prolonger les côtés longitudinaux des cadres formant lesdits panneaux $P_1$ et de prévoir des prolongements semblables sur les volets V.

On remarquera de plus que les panneaux $P_2$ à $P_n$ restent interchangeables et que le nombre d'articulations $A_0$ à $A_{n-1}$ n'augmente pas de sorte que la masse et la rigidité des générateurs solaires perfectionnés selon l'invention sont pratiquement identiques à celles des générateurs connus.

**Revendications**

1. Agencement de satellite artificiel, comportant :

— un corps de satellite (S),

— au moins un générateur solaire, comprenant un ensemble de panneaux ($P_1$ à $P_4$) porteurs de cellules solaires (1) et articulés (en $A_1$, $A_2$, $A_3$) l'un à la suite de l'autre pour pouvoir occuper, soit une position repliée pour laquelle lesdits panneaux ($P_1$ à $P_4$) sont repliés l'un sur l'autre en zigzag, soit une position déployée pour laquelle lesdits panneaux ($P_1$ à $P_4$) se trouvent au moins approximativement dans le prolongement l'un de l'autre, ledit ensemble de panneaux étant relié latéralement audit corps de satellite (S) par un volet (V) articulé d'un côté (en 3) sur ledit corps (S) et de l'autre côté (en $A_0$) sur le panneau d'extrémité proximal ($P_1$) et,

— au moins une antenne (13), articulée sur ledit corps de satellite (S) pour pouvoir occuper soit une position déployée (13') pour laquelle ladite antenne (13) se trouve à l'extérieur dudit corps (S) et dudit générateur solaire, soit une position repliée pour laquelle ladite antenne se trouve à l'aplomb dudit corps de satellite (S) et dudit générateur solaire, également en position repliée, du côté de l'articulation ($A_0$) dudit volet (V) audit panneau proximal ($P_1$), caractérisé en ce que, la forme de ladite antenne (13) et son articulation (3) sur le corps du satellite (S) étant prévues pour que, en positions repliées de l'antenne (13) et du générateur solaire, les parties latérales dudit générateur ne soient pas recouvertes par ladite antenne (13), les moyens d'articulation entre ledit volet (V) et ledit panneau proximal ($P_1$) se trouvent à l'extrémité de prolongements latéraux (18, 19) de ceux-ci, ces prolongements étant disposés de part et d'autre de ladite antenne repliée (13).

2. Agencement selon la revendication 1, dans lequel les panneaux ($P_1$ à $P_4$) du générateur solaire comporte un cadre périphérique, caractérisé en ce que les prolongements (18) solidaires du panneau proximal ($P_1$) sont constitués par des prolongements des côtés longitudinaux dudit cadre.

3. Agencement selon la revendication 2, caractérisé en ce que les prolongements (19) du volet d'articulation (V), quelle que soit la forme dudit volet, sont tels qu'ils sont accolés auxdits prolongements (18) du panneau proximal en position repliée du générateur solaire, pour être en prolongement de ceux-ci en position déployée de ce dernier.

4. Agencement de satellite artificiel comportant au moins un générateur solaire comprenant un ensemble de panneaux ($P_1$ à $P_4$) porteurs de cellules solaires (1) et articulés l'un à la suite de l'autre pour pouvoir occuper, soit une position repliée pour laquelle lesdits panneaux ($P_1$ à $P_4$) sont repliés l'un sur l'autre en zigzag, soit une position déployée pour laquelle lesdits panneaux ($P_1$ à $P_4$) se trouvent au moins approximativement dans le prolongement l'un de l'autre, ledit ensemble de panneaux étant relié latéralement au corps dudit satellite (S) par un volet (V) articulé d'un côté sur ledit corps (S) et de l'autre côté sur le panneau d'extrémité proximal ($P_1$), tandis que ledit satellite comporte au moins une antenne (13), articulée sur ledit corps de satellite (S) pour pouvoir occuper soit une position déployée (13') de fonctionnement, soit une position repliée pour laquelle ladite antenne (13) se trouve à l'aplomb dudit corps de satellite (S) et dudit générateur solaire, également en position repliée, du côté de l'articulation dudit volet (V) audit panneau proximal ($P_1$), caractérisé en ce que le volet d'articulation (V) et le panneau proximal ($P_1$) du générateur solaire comportent des prolongements latéraux (18, 19) en regard entre lesquels sont prévus des moyens d'articulation ($A_0$), de sorte que, en position repliée du générateur solaire, lesdits prolongements (18, 19) se trouvent de part et d'autre de ladite antenne repliée (13), lesdits moyens d'articulation ($A_0$) étant du côté opposé au générateur solaire par rapport à l'antenne (13).

**Claims**

1. An artificial satellite arrangement comprising :

— a satellite body (S),

— at least one solar generator comprising an assembly of panels ($P_1$ to $P_4$) bearing solar cells (1) and articulated (at A1, A2, A3) on one another in succession to occupy either a folded position for which said panels (P1 to P4) are folded on one another in zig zag form, or an unfolded position for which said panels (P1 to P4) are at least substantially in line with one another, said assembly of panels being connected laterally to said satellite body (S) by a flap (V) of which one side is articulated (at 3) on said body (S) and the other side (at A0) on the proximal end panel (P1), and

— at least one antenna (13), articulated on said satellite body (S) to occupy either an unfolded position (13) for which said antenna (13) is located outside said body (S) and said solar generator, or a folded position for which said antenna is straight above said satellite body (S) and said solar generator, also in folded position, towards the articulation (A0) of said flap (V) on said proximal panel (P1), characterized in that with the shape of said antenna (13) and its articulation (3) on the body (S) of the satellite being provided so that the lateral parts of said generator are not covered by said antenna (13), when the antenna (13) and the solar generator are in folded position, the articulation means between said flap (V) and said proximal panel (P1) are located at the end of lateral extensions (18, 19) thereof, these extensions being disposed on either side of said folded antenna (13).

2. Arrangement of Claim 1, in which the panels (P1 to P4) of the solar generator comprise a peripheral frame, characterized in that the extensions (18) fast with the proximal panel (P1) are constituted by extensions of the longitudinal sides of said frame.

3. Arrangement of Claim 2, characterized in that the extensions (19) of the flap (V), whatever the shape of said flap, are such that they are coupled to said extensions (18) of the proximal panel when the solar generator is in folded position, to be in line with said extensions when the generator is in unfolded position.

4. Artificial satellite arrangement with at least one solar generator, comprising an assembly of panels (P1 to P4) bearing solar cells (1) and articulated on one another in succession to occupy either a folded position for which said panels (P1 to P4) are folded on one another in zig zag form, or an unfolded position for which said panels (P1 to P4) are at least substantially in line with one another, said assembly of panels being connected laterally to the body (S) of said satellite by a flap (V) of which one side is articulated on said body (S) and the other side on the proximal end panel (P1), whilst said satellite comprises at least one antenna (13) articulated on said satellite body (S) to occupy either an unfolded position (13') for operation, or a folded position for which said antenna is located straight above said satellite body (S) and said solar generator, also in folded position, towards the articulation of said flap (V) on said proximal panel (P1), characterized in that said flap (V) and said proximal panel (P1) of the said generator comprise opposite lateral extensions (18,19) between which articulation means (A0) are provided, so that, when the solar generator is in folded position, said extensions (18, 19) are located on either side of said folded antenna (13), said articulation means (A0) being on the side opposite the solar generator with respect to the antenna (13).

**Ansprüche**

1. Anordnung bei einem künstlichen Satelliten

— mit einem Satellitenkörper (S),

— mindestens einem Solargenerator, der eine Anordnung von Solarzellen (1) tragenden und (bei $A_1$, $A_2$, $A_3$) aufeinanderfolgend aneinander angelenkter Platten ($P_1$ bis $P_4$) enthält, um entweder eine gefaltete Lage, für die diese Platten in Zick-Zack-Form aneinander gefaltet sind, oder eine ungefaltete Lage einzunehmen, wobei diese Plattenanordnung seitlich mit dem Satellitenkörper (S) durch eine Lasche (V) verbunden ist, deren eine Seite (bei 3) am Körper (S) un deren andere Seite (bei $A_0$) an der näc[illegible]en Endplatte ($P_1$) angelenkt ist, und

— mit mindestens einer Antenne (13), die an den Satellitenkörper (S) angelenkt ist, um entweder die ungefaltete Lage, für die die Antenne (13) sich außerhalb des Körpers (S) und des Solargenerators befindet, oder eine gefaltete Lage einzunehmen, für die die Antenne über dem Satellitenkörper (S) gerade ist und der Solargenerator, ebenfalls in gefalteter Lage, zur Angliederung ($A_0$) der Lasche (V) an der nächsten Platte ($P_1$) gerade ist, dadurch gekennzeichnet, daß, wenn die Form der Antenne (13) und ihrer Anbringung (3) am Satellitenkörper (S) so getroffen ist, daß seitliche Teile des Generators nicht von der Antenne (13) bedeckt sind, wenn diese und der Solargenerator zwischen der Lasche (V) und der nächsten Platte ($P_1$) am Ende deren seitlicher Verlängerungen (18, 19) liegen, diese Verlängerungen sich an jeder Seite der gefalteten Antenne (13) befinden.

2. Anordnung nach Anspruch 1, bei der die Platten ($P_1$ bis $P_4$) des Generators einen peripheralen Rahmen aufweisen, dadurch gekennzeichnet, daß die Verlängerungen (18) fest mit der nächsten Platte ($P_1$) von den Verlängerungen der Längsseiten des Rahmens gebildet werden.

3. Anordnung nach Anspruch 2, dadurch gekennzeichnet, daß die Verlängerungen (19) der Lasche (V), bei jeder beliebigen Form der Lasche, so geschaffen sind, daß sie an die Verlängerungen (18) der nächsten Platte angekuppelt sind, wenn der Solargenerator sich in der gefalteten Lage befindet, um in Linie mit den Verlängerungen zu liegen, wenn sich der Generator in der ungefalteten Lage befindet.

4. Anordnung bei einem künstlichen Satelliten mit mindestens einem Solargenerator, der eine Anordnung von Solarzellen (1) tragenden und aufeinanderfolgend aneinander angebrachter Platten ($P_1$ bis $P_4$) enthält, um entweder eine gefaltete Lage, für die diese Platten in Zick-Zack-Form aneinander gefaltet sind, oder eine ungefaltete Lage einzunehmen, für die die Platten ($P_1$ bis $P_4$) mindestens im wesentlichen in Linie miteinander liegen, wobei die Plattenanordnung seitlich mit dem Satellitenkörper (S) durch eine Lasche (V) verbunden ist, von der eine Seite an den Körper (S) und die andere Seite an die nächste Endplatte ($P_1$) angelenkt ist, während der Satellit mindestens eine Antenne (13) enthält, die an den Satellitenkörper (S) angelenkt ist, um entweder eine ungefaltete Lage (13') für den Betrieb oder eine gefaltete Lage einzunehmen, für die die Antenne über dem Satellitenkörper (S) und dem Solargenerator, ebenfalls in gefalteter Lage zu der Anlenkung der Lasche (V) an der nächsten Platte ($P_1$) gerade angeordnet ist, dadurch gekennzeichnet, daß die Lasche (V) und die nächste Platte ($P_1$) des Generators gegenüberliegende seitliche Verlängerungen (18, 19) besitzen, zwischen denen Anlenkeinrichtungen ($A_0$) vorgesehen sind, so daß bei gefalteter Lage des Solargenerators diese Verlängerungen (18, 19) an jeder Seite der gefalteten Antenne (13) liegen, und daß die Einrichtung zum Anlenken ($A_0$) sich auf der dem Solargenerator in bezug auf die Antenne (13) gegenüberliegenden Seite befindet.

Fig. 1

A0
A2
7
2
S
V
P1
P2
P3
H
5
P4
3
6
2
4
A1
A3

Fig. 2

A0
P1
A1
P2
A2
P3
3
V
1
1
l
L
L

Fig. 5

A0
A1
P1
P2
A2
P3
19
18
3
V
19
18

Fig:3
A0
19
18
15
14
12
13
A0
18
19
8
A4
A2
17
16
A2
A4
V
V
10'
3
3
9'
-S-
Pn
P2
P2
Pn
10
P1
P1
9
6
A5 A3 A1
A1 A3 A5
-11-

Fig. 4
9'
10'
12'
13'
12
13
9
10
8
14
15
16
17
18
19
S